# EUROPEAN PATENT SPECIFICATION

(11) **EP 2 011 392 B1**
(45) Date of publication and mention of the grant of the patent: **16.02.2011**
(21) Application number: 08104619.5
(22) Date of filing: 03.07.2008
(51) Int. Cl.: A01K 31/00, A01K 31/16, A01K 31/17

(54) **Floor element for a space adapted for laying of eggs by poultry**
Bodenelement für einen zum Eierlegen durch Geflügel geeigneten Raum
Élément de sol pour un espace adapté pour la ponte d'oeufs par des volailles

(30) Priority: 05.07.2007 NL 2000735
(43) Date of publication of application: 07.01.2009
(73) Proprietor: A.H. Jansen Holding B.V., 3772 MC Barneveld (NL)
(72) Inventor: Rijksen, Rijk, 8075 PH Elspeet (NL)
(74) Representative: Eveleens Maarse, Pieter

(56) References cited:
- FR-A- 2 801 471
- GB-A- 1 461 384
- NL-A- 7 209 124
- US-A- 1 431 278
- US-A- 2 692 578
- US-A- 2 904 003

## Description

The invention relates to a floor element for a space adapted for laying of eggs by poultry, wherein the floor element comprises a floor part which slopes downward to an egg discharge element and on which the poultry can walk. Poultry is here also understood to mean ducks.

Such a floor element is known as for instance a floor in a laying nest or a poultry cage. On such a floor the animals lay eggs which must be fed to the egg discharge element with the least possible chance of damage or fouling.

Poultry eggs have an elongate form. When an animal lays an egg, it may come to lie with its longitudinal axis transversely of the direction of slope. Use is usually made here of a material for the floor part which provides a resistance to the egg during rolling. As a result of the slope the egg will then roll in controlled manner to the egg discharge device, and hereby be further discharged. Even when the egg comes to lie with its longitudinal axis to a certain extent askew relative to the direction of slope, the egg will then usually tilt to a position in which it does roll downward. It does however occur that an egg comes to lie in a position with its longitudinal axis parallel or substantially parallel to the direction of slope. The egg will not then roll downward and remains lying in this position. This results in the chance of damage and fouling, while it moreover requires manual collection of the eggs.

US-A-1 431 278 discloses such a floor element wherein eggs which come to lie with their longitudinal axis parallel or substantially parallel to the direction of slope also roll in controlled manner to the egg discharge device. This prior art floor element for a space adapted for laying of eggs by poultry comprises a floor part which slopes downward to an egg discharge element and on which the poultry can walk, wherein the floor part is adapted to make a movement at least locally in vertical direction.

As a result of this measure an egg in a fixed position is given an impulse, whereby the egg - with the aid of the force of gravity - is moved to a position in which it does roll easily downward.

However in the loaded position wherein a chicken is present, the tilting angle is maximal so that the egg will indeed roll to the drawer, but - due to the large angle - at a great speed so that there is the danger that the egg may be broken.

The aim of the invention is to avoid this adverse effect. This aim is reached in that the the floor part is manufactured from flexible material, that the floor part is attached to a frame at two opposite edges parallel to the egg discharge element, that in the non-loaded situation the floor part is urged into a convex form and that the floor element is adapted to change the slope of the walkable floor part locally.

The invention also relates to a method for enhancing the controlled rolling of eggs laid by poultry on the floor element along a sloping floor element to an egg discharge member, wherein the floor part makes a movement at least locally in vertical direction from an convex form in an non-loaded situation when loaded by an animal and moves again to its upper or almost upper position when the animal has left.

According to a first preferred embodiment, the floor element is adapted to change the slope of the walkable floor part locally. By only changing the angle of slope of the floor part locally, slopes in the surface of the floor part are created in other directions so that an egg with its longitudinal direction in the original direction of the slope is also subjected to a slope in another direction not parallel to the longitudinal direction of the egg, so that the egg will start rolling more easily, albeit initially not in the direction to the egg discharge device.

It is noted here that floor parts of a plate manufactured from a flexible plastic and fingers extending substantially transversely of the plate already form part of the prior art per se. These floor plates are highly suitable for applying in the present invention; this is because they provide the eggs with a certain degree of rolling resistance so that the speed does not increase too much and damage is prevented. They also have the desired measure of flexibility to allow the deformation necessary for application of the invention. Finally, the space between the fingers forms a collecting location for faeces and loose feathers of the poultry, thus preventing fouling of the eggs.

According to a further embodiment, the floor element is adapted to cause movement in vertical direction of at least one strip of the floor part extending substantially parallel to the egg discharge element. The angle of slope is hereby changed locally in the surface of the floor element, so that an egg placed in a position where rolling is difficult is displaced easily to a position where rolling is more readily possible. Hereby the same effect is obtained as in the embodiment in which the floor element is made of flexible material and the floor element is adapted to change the slope of the walkable floor element locally.

It is however likewise possible for the floor element to be adapted to cause movement in vertical direction of at least one strip of the floor part extending substantially transversely of the egg discharge element. In addition to the already existing slope toward the egg discharge element, slopes are hereby also formed in the direction extending transversely thereof, whereby rotation of the eggs to a position where rolling is more easily possible is improved.

In order to obtain a type of automatic operation' of the device, a preferred embodiment provides the measure that the floor part takes a resilient form such that the floor part, when not loaded, occupies an upper position and, under the influence of the weight of an egg-laying animal, occupies a lower position. During the laying of an egg the weight of the egg-laying animal will press the floor part at least locally downward. When the egg has been laid, the animal leaves this position. Due to the resilient action the floor part moves once again to its upper or almost upper position, whereby the laid egg is moved easily to its easy rolling position. It is noted here that the floor part moves up and downward when walked on by the animals, which likewise has a favourable effect in initiating rolling of eggs less favourably positioned for rolling. This preferred embodiment also provides a method wherein the vertical movement of the floor part is caused by the movement of an animal.

When the floor part is supported by means of at least one placed resilient element on a substantially rigid frame, the option is provided of a free choice of material for the floor part, provided it has a certain degree of flexibility.

This resilient element can be formed simply by a piece of resilient material, such as a piece of foam material, whereby a structurally simple solution is obtained.

It is however likewise possible for the at least one resilient element to comprise a spring manufactured from metal. The resilient action is hereby concentrated in one or more individual components, which simplifies dimensioning.

A further embodiment provides the measure that the spring has an L-shaped configuration and that the legs of the spring make mutual contact at the bottom edge of the floor part. This embodiment makes it possible to attach the spring on one side to the frame and on the other to the floor part, while use can moreover be made of simple spring constructions.

It is however possible to dispense with separate springs when the floor part is embodied as individually resilient element. The number of components is hereby limited, albeit that higher standards are set for the material from which the floor part is manufactured, since this must after all produce the resilience.

Yet another preferred embodiment provides the measure that the floor part is manufactured from elastic material and that floor part is attached to a frame at two opposite edges so that in the non-loaded situation the floor part is urged into a convex form. As in the foregoing embodiment, the number of components is hereby limited, while the choice of material for the floor part is moreover less limited; the resilience is after all generated by the shape of the floor element.

In the above elucidated embodiments the actuation of the movement to be performed by the floor part is provided in each case by the egg-laying animal itself. For a better control of the process it is however possible to make use of an external actuation. A preferred embodiment provides for this purpose the measure that the floor element is coupled to an actuating device for periodically moving the floor part in vertical direction.

The present invention will be elucidated hereinbelow on the basis of the accompanying figures, in which:
- Fig. 1A: shows a cross-section of a first embodiment of a floor element according to the invention in the loaded position;
- Fig. 1B: shows a cross-section of the embodiment of figure 1A in the non-loaded position;
- Fig. 2A: shows a cross-section of a second embodiment of a floor element according to the invention in the loaded position;
- Fig. 2B: shows a cross-section of the embodiment of figure 2A in the non-loaded position; and
- Fig. 3: shows a longitudinal section of a third embodiment of the invention.

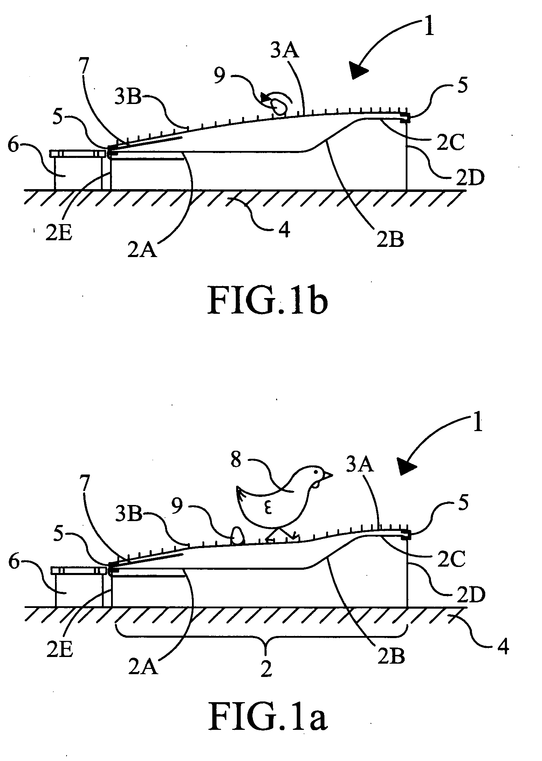

Figure 1A shows a floor element which is designated in its entirety with 1 and which comprises a frame 2 and a floor part 3 place thereon. Frame 2 is formed by a frame manufactured from metal wire and provided with a substantially horizontally extending part 2A, an inclining part 2B connecting thereto, a horizontal part 2C connecting hereto and two vertical parts 2D, 2 E respectively. This frame is placed on a surface 4. Placed on top of the frame is a floor part 3 which is manufactured from flexible material and which comprises a plate 3A, in addition to fingers 3B extending upward transversely of plate 3A. Floor part 3 is attached on its edges to frame 2 by means of clamps 5. At the low end of frame 2 is placed a conveyor belt 6 for discharging the eggs. Up to this point floor element 1 corresponds to a prior art floor element. It is noted here that such a floor is applied as floor for laying nests of poultry houses and poultry cages. Floor 1 serves to collect the eggs laid by the poultry and to discharge the eggs to conveyor belt 5.

Use is made according to the invention of a number of springs 7 formed by metal L-shaped brackets, a leg of each of which is attached to frame 2 while the other leg pushes floor part 3 upward. It will be apparent that other types of spring, such as helical springs, can be applied instead of these L-shaped brackets 7. The angle of slope and the form of the floor element is here such that in the non-loaded situation eggs will roll downward along the slope, even when they have been placed in a position which is less favourable for rolling.

In figure 1A the floor element 1 is shown in the situation when loaded by a chicken 8. The weight of chicken 8 compresses spring 7, whereby floor part 3 is urged into a flat or slightly sloping position. An egg 9 laid by chicken 8 will therefore not roll downward, or only roll downward when the egg is situated in a position optimal for rolling, i.e. with its longitudinal axis transversely of the plane of the drawing.

After laying egg 9 chicken 8 leaves the laying nest of which the floor element 1 forms the floor, and floor part 3 springs back to the non-loaded position as shown in figure 1B. The angle of slope of floor part 3 is hereby increased and egg 8 will roll easily downward, even when it is situated in a starting position which is less than optimal for rolling. Also important here is the effect that due to the upward movement of floor part 3 the egg 9 is subjected to an impulse whereby, also as a result of the action of the force of gravity, the position of egg 9 is changed to a starting position which is better for rolling.

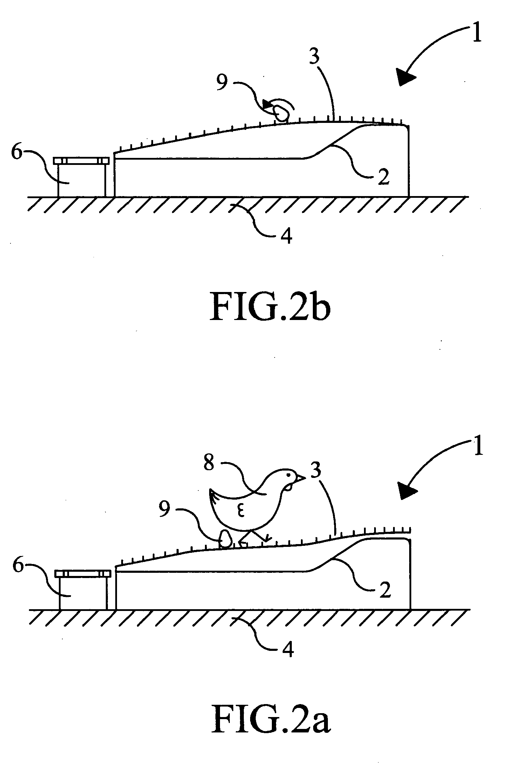

Figures 2A and 2b show similar situations of another embodiment of the invention. This embodiment differs in the fact that no separate springs or other resilient elements are shown, but that the resilient action is obtained by enclosing floor part 3 at its edges. The connection between the edges of floor part 3 and frame 2 is here fixed such that no displacement of the edges of floor part 3 is possible and the edges are fixed. In the loaded position floor part 3 will hereby take on the shape shown in figure 2A, and in the non-loaded position take on the shape shown in figure 2B, whereby the same effect is achieved as in the embodiment shown in figures 1A and 1B. Instead of this resilience caused by the shape, it is also possible to make use of a material for the floor part which of itself has the desired resilience.

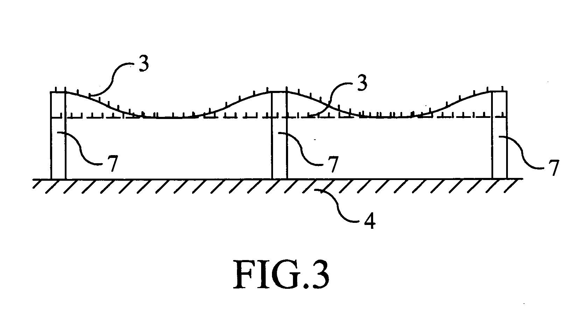

Finally, figure 3 shows an embodiment wherein the deformation of floor part 3 is such that in the non-loaded situation curves are present in the direction parallel to the conveyor belt. Spring elements 10 are arranged for this purpose distributed along the lengthwise direction, wherein the distance between the spring elements is such that the curved effect is created. When chickens 8 are present at the relevant positions, the floor part takes up the position as indicated with broken lines.

It is otherwise also possible to obtain a reverse configuration so that in the presence of a load the curves are created in the lengthwise direction. In both cases the curves in the lengthwise direction result in an inclining slope so that the eggs present in a position which is less than optimal for rolling will roll easily to the conveyor belt.

It will be apparent that diverse changes can be made to the above described embodiments without departing from the scope of the invention.

## Claims

1. Floor element (1) for a space adapted for laying of eggs by poultry, wherein the floor element (1) comprises a floor part (3) which slopes downward to an egg discharge element (6) and on which the poultry can walk, wherein the floor part (3) is adapted to make a movement at least locally in vertical direction, **characterized in that** the floor part (3) is manufactured from flexible material, that the floor part is attached to a frame (2) at two opposite edges (5) parallel to the egg discharge element (6) so that in the non-loaded situation the floor part (3) is urged into a convex form and that the floor element (1) is adapted to change the slope of the walkable floor part (3) locally.

2. Floor element as claimed in claim 1, **characterized in that** the floor element (1) is adapted to cause movement in vertical direction of at least one strip of the floor part (3) extending substantially parallel to the egg discharge element (6).

3. Floor element as claimed in claim 1, **characterized in that** the floor element (1) is adapted to cause movement in vertical direction of at least one strip of the floor part (3) extending substantially transversely of the egg discharge element (6).

4. Floor element as claimed in claim 1, 2 or 3, **characterized in that** the floor part (3) takes a resilient form such that the floor part (3), when not loaded, occupies an upper position and, under the influence of the weight of an egg-laying animal, occupies a lower position.

5. Floor element as claimed in claim any of the preceding claims, **characterized in that** the floor part (3) is supported by means of at least one placed resilient element (7) on a substantially rigid frame (2).

6. Floor element as claimed in claim 5, **characterized in that** the at least one resilient element (7) comprises a piece of resilient material.

7. Floor element as claimed in claim 6, **characterized in that** the at least one resilient element (7) comprises a spring manufactured from metal.

8. Floor element as claimed in claim 7, **characterized in that** the spring (7) has an L-shaped configuration and that the legs of the spring make mutual contact at the bottom edge of the floor part (3).

9. Floor element as claimed in claim 5, **characterized in that** the floor part is embodied as individually resilient element.

10. Floor element as claimed in claim any of the claims 1-5, **characterized in that** the floor element is coupled to an actuating device for periodically moving the floor part in vertical direction.

11. Laying nest, comprising a floor element as claimed in any of the foregoing claims.

12. Poultry cage, comprising a floor element as claimed in any of the foregoing claims.

13. Method for enhancing the controlled rolling of eggs laid by poultry on a floor element along a sloping floor part to an egg discharge member, **characterized in that** the floor part makes a movement at least locally in vertical direction from a convex form in a non-loaded situation when loaded by an animal and moves again to its upper or almost upper position when the animal has left.

## Patentansprüche

1. Bodenelement (1) für einen zum Eierlegen durch Geflügel geeigneten Raum, worin das Bodenelement (1) ein Bodenteil (3) umfasst, das in der Richtung eines Eierabfuhrelements (6) abfällt und auf dem das Geflügel laufen kann, worin das Bodenteil (3) ausgelegt ist, zumindest örtlich eine Bewegung in vertikaler Richtung auszuführen, **dadurch gekennzeichnet, dass** das Bodenteil (3) aus einem biegsamen Material hergestellt ist, dass das Bodenteil an einem Rahmen (2) an zwei gegenüberliegenden Kanten (5) parallel zum Eierabfuhrelement (6) befestigt ist, sodass in der nicht-belasteten Situation das Bodenteil (3) in eine konvexe Form gedrängt wird und dass das Bodenelement (1) ausgelegt ist, die Neigung des begehbaren Bodenteils (3) örtlich zu verändern.

2. Bodenelement nach Anspruch 1, **dadurch gekennzeichnet, dass** das Bodenelement (1) ausgelegt ist, eine Bewegung in vertikaler Richtung von zumindest einem Streifen des Bodenteils (3), der sich im Wesentlichen parallel zu dem Eierabfuhrelement (6) erstreckt, zu verursachen.

3. Bodenelement nach Anspruch 1, **dadurch gekennzeichnet, dass** das Bodenelement (1) ausgelegt ist, eine Bewegung in vertikaler Richtung von zumindest einem Streifen des Bodenteils (3), der sich im Wesentlichen quer zu dem Eierabfuhrelement (6) erstreckt, zu verursachen.

4. Bodenelement nach Anspruch 1, 2 oder 3, **dadurch gekennzeichnet, dass** das Bodenteil (3) eine federnde Form einnimmt, derart dass das Bodenteil (3) im unbelasteten Zustand eine obere Position einnimmt und unter dem Einfluss des Gewichts eines eierlegenden Tieres eine tiefere Position einnimmt.

5. Bodenelement nach einem der vorhergehenden Ansprüche, **dadurch gekennzeichnet, dass** das Bodenteil (3) auf einem im Wesentlichen festen Rahmen (2) von mindestens einem angeordneten federnden Element (7) getragen wird.

6. Bodenelement nach Anspruch 5, **dadurch gekennzeichnet, dass** das mindestens eine federnde Element (7) ein Stück eines federnden Materials umfasst.

7. Bodenelement nach Anspruch 6, **dadurch gekennzeichnet, dass** das mindestens eine federnde Element (7) eine aus Metall gefertigte Feder umfasst.

8. Bodenelement nach Anspruch 7, **dadurch gekennzeichnet, dass** die Feder (7) eine L-förmige Anordnung hat und dass die Beine der Feder an der Bodenkante des Bodenteils (3) miteinander in Kontakt stehen.

9. Bodenelement nach Anspruch 5, **dadurch gekennzeichnet, dass** das Bodenteil als individuell federndes Element ausgeführt wird.

10. Bodenelement nach einem der Ansprüche 1-5, **dadurch gekennzeichnet, dass** das Bodenelement mit einem Betätigungsmechanismus gekoppelt ist, für die periodische Bewegung des Bodenteils in vertikaler Richtung.

11. Legenest, das ein Bodenelement nach einem der vorhergehenden Ansprüche umfasst.

12. Geflügelkäfig, der ein Bodenelement nach einem der vorhergehenden Ansprüche umfasst.

13. Verfahren zur Verbesserung des kontrollierten Rollens von Eiern, die von Geflügel auf ein Bodenelement gelegt werden, entlang einem abschüssigen Bodenteil zu einem Eierabfuhrelement, **dadurch gekennzeichnet, dass** das Bodenteil zumindest örtlich eine Bewegung in vertikaler Richtung ausführt von einer konvexen Form in einem unbelasteten Zustand, wenn es von einem Tier belastet wird, und wieder in seine obere oder beinahe obere Position zurückkehrt, wenn es das Tier verlassen hat.

## Revendications

1. Elément formant sol (1) pour un espace adapté à la ponte d'oeufs par des volailles, étant entendu que l'élément formant sol (1) comprend une pièce de sol (3) qui descend en pente jusqu'à un élément (6) d'évacuation d'oeufs et sur laquelle les volailles peuvent marcher, étant entendu que la pièce de sol (3) est adaptée pour faire un mouvement au moins localement dans le sens vertical, **caractérisé en ce que** la pièce de sol (3) est fabriquée en un matériau flexible, **en ce que** la pièce de sol est attachée à un bâti (2) par deux bords opposés (5) parallèles à l'élément (6) d'évacuation d'oeufs de telle sorte que, dans la situation de non-mise en charge, la pièce de sol (3) soit forcée de prendre une forme convexe et que l'élément formant sol (1) soit adapté pour modifier localement la pente de la pièce de sol (3) accessible.

2. Elément formant sol selon la revendication 1, **caractérisé en ce que** l'élément formant sol (1) est adapté pour provoquer un mouvement dans le sens vertical d'au moins une bande de la pièce de sol (3) d'extension sensiblement parallèle à l'élément (6) d'évacuation d'oeufs.

3. Elément formant sol selon la revendication 1, **caractérisé en ce que** l'élément formant sol (1) est adapté pour provoquer un mouvement dans le sens vertical d'au moins une bande de la pièce de sol (3) d'extension sensiblement transversale par rapport à l'élément (6) d'évacuation d'oeufs.

4. Elément formant sol selon la revendication 1, 2 ou 3, **caractérisé en ce que** la pièce de sol (3) prend une forme résiliente de telle sorte que la pièce de sol (3), quand elle n'est pas en charge, occupe une position haute et que, sous l'influence du poids d'un animal occupé à pondre, elle occupe une position plus basse.

5. Elément formant sol selon l'une quelconque des revendications précédentes, **caractérisé en ce que** la pièce de sol (3) est soutenue au moyen d'au moins un élément résilient (7) placé sur un bâti (2) sensiblement rigide.

6. Elément formant sol selon la revendication 5, **caractérisé en ce que** le au moins un élément résilient (7) consiste en un morceau de matériau résilient.

7. Elément formant sol selon la revendication 6, **caractérisé en ce que** le au moins un élément résilient (7) consiste en un ressort fabriqué en métal.

8. Elément formant sol selon la revendication 7, **caractérisé en ce que** le ressort (7) a une configuration en forme de L et **en ce que** les branches du ressort entrent en contact les unes avec les autres au bord inférieur de la pièce de sol (3).

9. Elément formant sol selon la revendication 5, **caractérisé en ce que** la pièce de sol est réalisée sous la forme d'un élément individuellement résilient.

10. Elément formant sol selon l'une quelconque des revendications 1-5, **caractérisé en ce que** l'élément formant sol est couplé à un dispositif d'actionnement pour faire bouger périodiquement la pièce de sol dans le sens vertical.

11. Pondoir, comprenant un élément formant sol selon l'une quelconque des revendications précédentes.

12. Cage à volailles, comprenant un élément formant sol selon l'une quelconque des revendications précédentes.

13. Procédé pour améliorer le roulement régulé d'oeufs pondus par des volailles sur un élément formant sol le long d'une pièce de sol en pente jusqu'à un élément d'évacuation d'oeufs, **caractérisé en ce que** la pièce de sol fait un mouvement au moins localement dans le sens vertical, à partir d'une forme convexe dans une situation de non-mise en charge, quand elle est mise en charge par un animal, et revient à sa position haute ou presque haute quand l'animal est parti.
